# EUROPÄISCHE PATENTSCHRIFT

(11) **EP 4 081 390 B1**
(45) Veröffentlichungstag und Bekanntmachung des Hinweises auf die Patenterteilung: **26.06.2024**
(21) Anmeldenummer: 21703607.8
(22) Anmeldetag: 26.01.2021
(51) Int. Cl.: B29C 70/46, B29C 70/88, B29C 70/84, B29C 70/18, H01M 50/282, H01M 50/278, H01M 50/249, B32B 9/00

(54) **ABDECKSTRUKTUR UND VERFAHREN ZUM HERSTELLEN EINER ABDECKSTRUKTUR**
COVER STRUCTURE AND METHOD FOR PRODUCING A COVER STRUCTURE
STRUCTURE DE COUVERCLE ET PROCÉDÉ DE FABRICATION D'UNE STRUCTURE DE COUVERCLE

(30) Priorität: 04.02.2020 DE 102020102790; 19.03.2020 DE 102020107676; 02.04.2020 DE 102020109259; 19.06.2020 DE 102020116305
(43) Veröffentlichungstag der Anmeldung: 02.11.2022
(73) Patentinhaber: Georg Fritzmeier GmbH & Co. KG, 85653 Aying (DE)
(72) Erfinder: FRAUNHOFER, Stephan, 85653 Aying (DE)
(74) Vertreter: Winter, Brandl - Partnerschaft mbB
(86) Internationale Anmeldenummer: PCT/EP2021/051677
(87) Internationale Veröffentlichungsnummer: WO 2021/156095

(56) Entgegenhaltungen:
- CN-A- 106 450 083
- DE-A1-102015 101 242
- US-A- 5 316 839

## Beschreibung

Die Erfindung betrifft ein Verfahren zum Herstellen einer Abdeckstruktur, insbesondere für eine Batterie.

Seit einigen Jahren besteht ein Trend dahingehend, Verbrennungsmotoren durch Elektromotoren zu ersetzen. Ein Problem dabei ist die Bereitstellung von hinreichender Batteriekapazität. Insbesondere bei mit Elektromotoren ausgeführten Kraftfahrzeugen müssen zur Gewährleistung einer zufriedenstellenden Reichweite Batterien mit großer Kapazität eingebaut werden. Diese werden häufig am Unterboden des Fahrzeugs befestigt und müssen dementsprechend gegen äußere Einflüsse geschützt werden. Derartige mit einem Unterfahrschutz ausgeführte Batterietragstrukturen sind beispielsweise in der DE 10 2011 005 403 A1 und der WO 2018/149762 A1 offenbart.

Dabei werden in der Regel die Batterien in einer Art Batteriekasten aufgenommen, über die die eigentliche Batterie zur Fahrbahn hin mittels eines Unterfahrschutzes geschützt ist. Der zur Karosserie/Fahrzeugkabine hinweisende Teil der Batterietragstruktur ist über eine Abdeckstruktur abgedeckt. Diese muss so ausgebildet sein, dass sie bei einem Brand der Batterie für eine bestimmte Zeit, beispielsweise fünf Minuten der Wärmeentwicklung standhalten, so dass ein Übergreifen auf die Fahrzeugkabine und sonstige Fahrzeugkomponenten verzögert wird.

Ein derartiger Batteriekasten, auch Batteriegehäuse genannt, ist in der Druckschrift DE 10 2010 043 899 A1 beschrieben. Bei dieser Lösung ist ein Batteriegehäuse mit einem Gehäusedeckel, der entsprechend einer Außenkontur einer Batteriezelle ausgebildet ist und einem Gehäuseboden ausgebildet, der an den haubenförmigen Gehäusedeckel angesetzt ist. Dieses Batteriegehäuse ist bei der bekannten Lösung aus einem schwer entzündlichen Kunststoff gefertigt.

Eine derartige Lösung hält einer längeren Wärmeentwicklung nicht stand.

In dem Dokument DE 10 2013 220 778 A1 ist ebenfalls ein aus Kunststoff gefertigtes Batteriegehäuse beschrieben, das die gleichen Nachteile wie die oben genannte Batteriegehäusestruktur aufweist.

In der gattungsfremden Druckschrift DE 10 2009 050 787 A1 ist ein aus Kunststoff bestehendes Flugzeugbauteil beschrieben, das zur Verbesserung des Brandverhaltens mit einer glimmerhaltigen Sperrschicht ausgeführt ist. CN 106 450 083 A offenbart ein Verfahren zur Herstellung eines Batteriekastendeckels.

Bekannt sind Lösungen, bei denen die beispielsweise als Batteriekastendeckel dienenden Abdeckstrukturen als Sheet-Moulded-Compound-Grundkörper (SMC-Grundkörper) gefertigt werden und der erforderliche Brandschutz dann durch nachträgliches Aufkleben einer Brandschutzschicht, beispielsweise von Glimmer- bzw. Mikanitplatten erzielt wird. Weiterhin ist es bekannt eine Elektromagnetische-Verträglichkeits-Schicht (EMV-Schicht) an der Oberseite des SMC- Grundkörpers anzubringen.

Diese Vorgehensweise bedarf eines erheblichen fertigungstechnischen Aufwandes.

Demgegenüber liegt der Erfindung die Aufgabe zu Grunde, eine Abdeckstruktur zu schaffen, die zum einen den brandschutztechnischen Anforderungen und zum anderen den EMV-Anforderungen genügt, und die sich dabei mit verringertem Aufwand herstellen lässt. Der Erfindung liegt des Weiteren die Aufgabe zu Grunde, ein Verfahren zur Herstellung einer derartigen Abdeckstruktur zu schaffen.

Diese Aufgabe wird im Hinblick auf das Verfahren durch die Merkmalskombination des Anspruches 1 gelöst.

Vorteilhafte Weiterbildungen der Erfindung sind Gegenstand der Unteransprüche.

Die offenbarte Abdeckstruktur ist insbesondere zur Verwendung als einer Batteriekastenwandung, vorzugsweise als eine Batterieabdeckung für ein Elektrofahrzeug ausgelegt. Diese Abdeckstruktur hat einen Sheet-Moulded-Compound-Grundkörper (SMC-Grundkörper). Als Brandschutzschicht ist mindestens ein Formteil und/oder mindestens eine ebene Platte vorgesehen. Zur Verbesserung der elektromagnetischen Verträglichkeit (EMV) und somit vorzugsweise zur Abschirmung gegenüber anderen Antriebs- und Steuerungs-/Regelelementen des Fahrzeugs ist die Abdeckstruktur mit einer Elektromagnetischen-Verträglichkeitsschicht (EMV-Schicht) ausgeführt. Die Herstellung der Abdeckstruktur ist besonders einfach, da die Brandschutzschicht und die EMV-Schicht mit dem Grundkörper verklebt sind. Durch die einheitliche Verklebung der drei genannten Bauteile in einem Arbeitsgang in einer Klebepresse sind Synergien nutzbar.

Die Herstellung der Abdeckstruktur ist besonders einfach, wenn das mindestens eine Formteil der Brandschutzschicht und die entsprechend einer Geometrie des SMC-Grundkörpers ausgeführte EMV-Schicht mit dem Grundkörper verklebt sind.

Es wird besonders bevorzugt, wenn der SMC-Grundkörper und die EMV-Schicht und die Brandschutzbeschichtung mittels eines reaktiven Hotmelt-Klebesystems miteinander verklebt sind. Dabei sind physikalisch abbindende Klebstoffe (Thermoplaste) und chemisch abbindende Klebstoffe (Duroplaste) möglich. Damit ist eine besonders haltbare und resistente Abdeckstruktur geschaffen.

Selbstverständlich kann anstelle eines derartigen Hotmelt-Klebers auch ein anderer Kleber, beispielsweise ein Pulverklebstoff oder sonstige Klebstoffe verwendet werden, die vorzugsweise vorab auf den Bauteilen bzw. auf zumindest einem Bauteil einer Klebepaarung appliziert werden und dann durch Einlegen in die Klebepresse aktiviert werden, um die Verklebung durchzuführen. Wie erläutert, kann vor dem Einlegen in die Klebepresse die mit dem Klebstoff versehene Schicht abgedeckt werden, um ein Anhaften von Verschmutzungen oder ein unbeabsichtigtes Verkleben zu vermeiden.

Prinzipiell ist es jedoch auch möglich, dass der Klebstoff erst unmittelbar vor Einlegen der Bauteile in die Klebepresse aufgetragen wird.

Insbesondere bei Automotive-Anwendungen wird es bevorzugt, wenn die EMV-Schicht auf der von der Brandschutzbeschichtung abgewandten Seite des SMC-Grundkörpers aufgebracht ist. Insbesondere ist in der Einbaulage der Abdeckstruktur im Fahrzeug die Brandschutzbeschichtung unten und die EMV-Schicht oben.

Es wird bevorzugt, wenn die Brandschutzbeschichtung im Wesentlichen aus mindestens einer Glimmerplatte oder Mikanitplatte und/oder aus mindestens einem Glimmerformteil oder Mikanitformteil gebildet ist. Dabei wird die Brandschutzbeschichtung vorzugsweise aus einer Vielzahl derartiger Platten zusammengesetzt.

Bei einem besonders einfach aufgebauten Ausführungsbeispiel ist die EMV-Schicht als Aluminiumfolie oder Aluminiumkaschierung ausgeführt, die den SMC-Grundkörper teilweise oder weitgehend oder vollständig überdeckt.

Um die Positionierung der EMV-Schicht relativ zum SMC-Grundkörper zu erleichtern, kann eine Selbstzentrierung vorgesehen sein, die von einer Einwölbung der EMV-Schicht und einer dazu passenden Auswölbung des SMC-Grundkörpers gebildet ist.

Die für die Herstellung einer vorbeschriebenen Abdeckstruktur geeignete Klebepresse hat ein Oberwerkzeug und ein Unterwerkzeug, deren Formflächen an die Großflächen zu verklebenden Abdeckstruktur angepasst sind.

Gemäß dem erfindungsgemäßen Verfahren werden die Brandschutzbeschichtung und die EMV-Schicht gemeinsam in einem Arbeitsgang mit dem SCM-Grundkörper verklebt. Dies erfolgt in einer Klebepresse, in die der SMC-Grundkörper, die Brandschutzbeschichtung und die EMV-Schicht (umgeformte Aluminiumfolie oder -kaschierung) eingelegt werden. Abschließend wird durch Schließen der Werkzeughälften (Oberwerkzeug/Unterwerkzeug) der SMC-Grundkörper mit der Brandschutzbeschichtung und mit der EMV-Schicht zu der Abdeckstruktur verpresst und verklebt.

Bei einer für eine Serienfertigung geeigneten Weiterbildung des Verfahrens wird zuerst die Brandschutzbeschichtung auf dem Unterwerkzeug positioniert und fixiert. Nach diesem Einlegen der Brandschutzbeschichtung wird der SMC-Grundkörper in der Klebepresse positioniert. Danach wird die EMV-Schicht eingelegt.

Wenn die Brandschutzbeschichtung ein Formteil aufweist, dann hat das Unterwerkzeug eine entsprechende Formfläche.

Bei einer anderen Weiterbildung des Verfahrens wird das zumindest eine die Brandschutzbeschichtung ausbildende Formteil außerhalb der Klebepresse zunächst an der Unterseite des SMC-Grundkörpers vorfixiert. Dann kann der SMC-Grundkörper mit der vorfixierten Brandschutzbeschichtung auf das Unterwerkzeug der Klebepresse gelegt werden, so dass die beiden erstgenannten Schritte des erfindungsgemäßen Verfahrens gleichzeitig erfolgen. Schließlich wird die EMV-Schicht auf die Oberseite des SMC-Grundkörpers aufgelegt.

Um die Vorfixierung - z.B. in Form von Klebestreifen - einfach anbringen zu können wird es besonders bevorzugt, wenn außerhalb der Klebepresse die Brandschutzbeschichtung auf den mit seiner Unterseite nach oben weisenden SMC-Grundkörper aufgelegt wird und dort vorfixiert wird. Dann kann der SMC-Grundkörper mit der vorfixierten Brandschutzbeschichtung umgedreht werden, bevor es auf das Unterwerkzeug der Klebepresse gelegt wird.

Fertigungszeit lässt sich sparen, wenn das Verpressen und Verkleben zeitnah nach dem Entformen des SMC-Grundkörpers aus einem SMC-Presswerkzeug oder zeitnah nach dem Aufbringen des Klebstoffs oder zeitnah nach dem Vorfixieren der Brandschutzbeschichtung erfolgt.

Fertigungszeit und Tragarbeit lassen sich sparen, wenn das Verpressen und Verkleben räumlich nah an oder benachbart zu dem SMC-Presswerkzeug, in dem der SMC-Grundkörpers geformt wurde, erfolgt. Z.B. beträgt der Abstand zwischen dem SMC-Presswerkzeug und der Klebepresse maximal 10 Meter, vorzugsweise maximal 5 Meter.

Auch mit Bezug zum erfindungsgemäßen Verfahren können der SMC-Grundkörper, die EMV-Schicht und die Brandschutzbeschichtung mittels eines reaktiven Hot-melt-Klebesystems miteinander verklebt werden. Dabei sind physikalisch abbindende Klebstoffe (Thermoplaste) und chemisch abbindende Klebstoffe (Duroplaste) möglich. Damit wird eine besonders haltbare und resistente Abdeckstruktur geschaffen. Wie ausgeführt, können auch andere Klebstoffe verwendet werden.

Ein bevorzugtes Ausführungsbeispiel der Erfindung wird im Folgenden anhand schematischer Zeichnungen näher erläutert. Es zeigen:
Figur 1 die erfindungsgemäße Abdeckstruktur vor dem Verpressen und Verkleben in einer Klebepresse in einer Explosionsdarstellung;
Figur 2 einen Großteil der erfindungsgemäß verklebten und verpressten Abdeckstruktur aus Figur 1 in einer perspektivischen Darstellung; und
Figur 3 einen Ausschnitt eines Querschnitts durch eine Abdeckstruktur aus Figur 2.

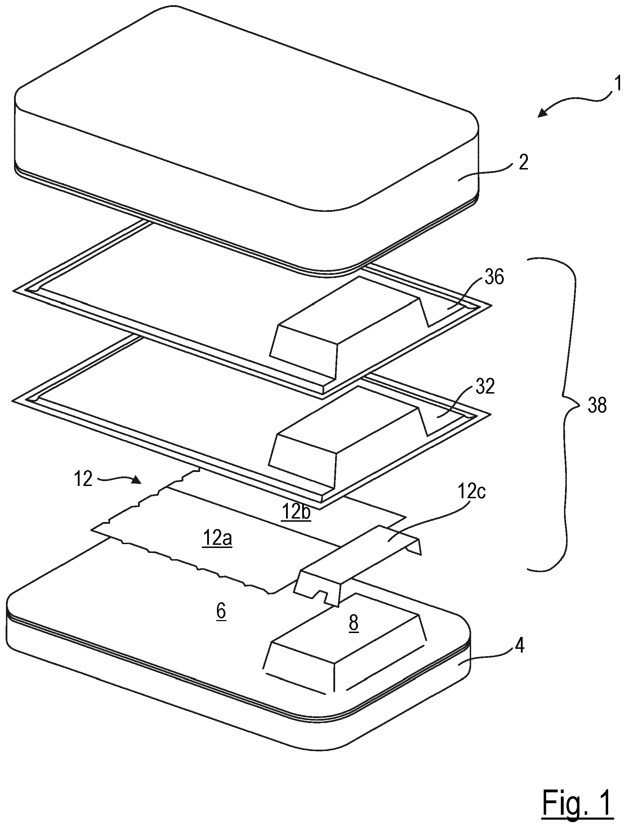

Figur 1 zeigt den prinzipiellen Aufbau einer Klebepresse 1 mit einem Oberwerkzeug 2 und einem Unterwerkzeug 4, die in der Darstellung gemäß Figur 1 auseinandergefahren sind. An dem Unterwerkzeug 4 (und entsprechend auch im Oberwerkzeug 2) sind Formflächen 6 ausgebildet, die im geschlossenem Zustand drei Komponenten 32, 12, 36 einer Abdeckstruktur 38, verpressen und verkleben. Die Abdeckstruktur 38 dient beim gezeigten Ausführungsbeispiel als Batteriedeckel eines Elektrofahrzeugs.

Die Formflächen 6 sind entsprechend der Geometrie dieser Abdeckstruktur 38 als 3D-Fläche ausgebildet. Beim dargestellten Ausführungsbeispiel wölbt sich die Formfläche 6 des Unterwerkzeugs 4 in dem in Figur 1 rechten Bereich nach oben, hin zum Oberwerkzeug 2 aus, so dass eine Auswölbung 8 ausgebildet ist. Im Werkzeugoberteil 2 ist eine entsprechende (nicht gezeigte) Einwölbung vorgesehen, so dass beim Schließen der Klebepresse 1 eine Hutze verklebt wird, die im montierten Zustand eine Komponente des Elektrofahrzeugs, beispielsweise einen Tank oder dergleichen überdeckt.

In die geöffnete Klebepresse 1 wird ein SMC-Grundkörper 32 sowie eine Brandschutzbeschichtung 12 und eine EMV-Schicht 36 eingelegt. Beim dargestellten Ausführungsbeispiel ist die Brandschutzbeschichtung 12 mehrteilig aus Glimmerplatten 12a, 12b, 12c ausgebildet, die zunächst auf die Formfläche 6 aufgelegt werden. Die Glimmerplatte 12c überdeckt dabei die die Hutze ausbildende Auswölbung 8. Die Glimmerplatten 12a, 12b, 12c sind entsprechend der Kontur der Formflächen 6 bzw. der auszuformenden Abdeckstruktur 38 ausgebildet. Die beiden Glimmerplatten 12a, 12b, haben einen Abstand zur Glimmerplatte 12c. Die Glimmerplatten 12a, 12b, 12c decken im verbauten Zustand der Abdeckstruktur 38 die bei einer Hitzeentwicklung gefährdeten Bereiche der Abdeckstruktur 38 und die darüber liegenden Bauteile des Elektrofahrzeugs ab.

Zunächst wird mittels Sprühpistole der Klebstoff auf die Glimmerplatten 12a, 12b, 12c und auf die EMV-Schicht 36 aufgebracht.

In einer Serienfertigung erfolgt der Klebstoffauftrag vorzugsweise mittels eines Roboters im Spinnsprühauftrag.

Nach dem Einlegen der Glimmerplatten 12a, 12b, 12c wird der SMC-Grundkörper 32 in die Klebepresse 1 eingelegt, der beispielsweise aus einer Fasermatte, einem Faserflies oder dergleichen besteht, die bzw. das von einer Kunststoffmatrix, beispielsweise einem Polyester- oder Vinylesterharz, umgeben ist. Der so gebildete SMC-Rohling wurde vor der Anwendung des erfindungsgemäßen Verfahrens in einem auf eine Umform-/Schmelztemperatur erwärmten SMC-Presswerkzeug aufgeschmolzen, so dass der SMC-Rohling in die vorbestimmte Geometrie des SMC-Grundkörpers 32 umgeformt werden konnte und nach dem Aushärten/Entformen diese 3D-Geometrie beibehalten hat.

Alternativ werden die Glimmerplatten 12a, 12b, 12c außerhalb der Klebepresse zunächst an der Unterseite des SMC-Grundkörpers 32 mittels Klebestreifen vorfixiert. Um diese einfach anbringen zu können, werden die Glimmerplatten 12a, 12b, 12c außerhalb der Klebepresse 1 auf den mit seiner (in verbauter Lage) Unterseite nach oben weisenden SMC-Grundkörper 32 aufgelegt. Dann wird der SMC-Grundkörper 32 mit den vorfixierten Glimmerplatten 12a, 12b, 12c umgedreht und auf das Unterwerkzeug 4 der Klebepresse 1 gelegt.

In der Serienfertigung werden die beschichteten Glimmerplatten 12a, 12b, 12c auf dem Unterwerkzeug 4 positioniert und fixiert.

Zur Verbesserung der elektromagnetischen Verträglichkeit (EMV) wird auf den SMC-Grundkörper 32 auf der von der Brandschutzbeschichtung 12 abgewandten Großfläche (in Figur 1 oben) die EMV-Schicht 36 aufgeklebt. Beim dargestellten Ausführungsbeispiel ist diese EMV-Schicht 36 aus einer Aluminiumfolie/-kaschierung gebildet, die vor der Anwendung des erfindungsgemäßen Verfahrens in einem Umformwerkzeug entsprechend der 3D-Geometrie des SMC-Grundkörpers 32 geformt wurde.

Um die Positionierung der EMV-Schicht 36 relativ zum SMC-Grundkörper 32 zu erleichtern, ist eine Selbstzentrierung vorgesehen, die beim dargestellten Ausführungsbeispiel von einer Einwölbung der EMV-Schicht 36 und einer dazu passenden Auswölbung des SMC-Grundkörpers 32 gebildet ist. Wenn die EMV-Schicht 36 auf den SMC-Grundkörper 32 abgesenkt wird, tauch die Auswölbung in die Einwölbung formschlüssig ein, wodurch sich eine (Vor)positionierung der beiden Teile zueinander ergibt.

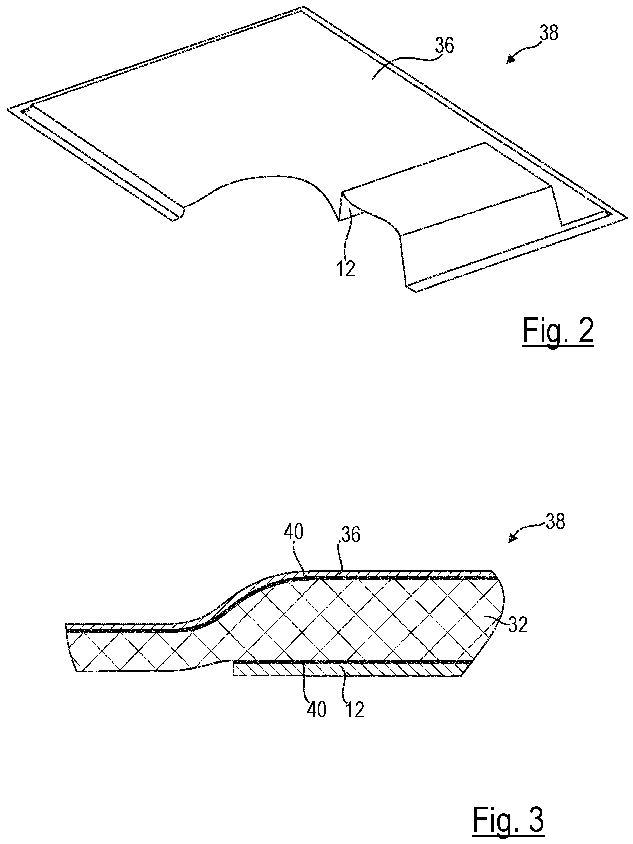

In einem einzigen Arbeitsgang wird schließlich der SMC-Grundkörper 32 einerseits mit der Brandschutzbeschichtung 12 und andererseits mit der EMV-Schicht 36 mittels eines reaktiven Hotmelt-Klebesystems und der Klebepresse 1 verpresst und verklebt, so dass nach diesem Arbeitsgang die Abdeckstruktur 38 gemäß Figur 2 ausgebildet ist, die zur Fahrzeugkabine des Elektrofahrzeugs hin mit der EMV-Schicht 36 und zur Batterie hin mit der Brandschutzbeschichtung 12 versehen ist.

Figur 3 zeigt den Schichtaufbau der fertig verklebten Abdeckstruktur 38 mit der oben (Ansicht nach Figur 3) liegenden EMV-Schicht 36, die über Klebstoff einer Klebefuge 40 flächig mit dem SMC-Grundkörper 32 verbunden ist. Dieser ist über Klebstoff einer weiteren Klebefuge 40 mit den Glimmerplatten 12a, 12b, 12c verbunden. Dabei können physikalisch abbindende Klebstoffe (Thermoplaste) und chemisch abbindende Klebstoffe (Duroplaste) verwendet werden. Somit ist ein homogener Schichtaufbau der Abdeckstruktur 38 gewährleistet, der im Hinblick auf die EMV-Problematik, die Brandschutzbeständigkeit und die mechanische Festigkeit optimiert ist.

Auf diese Weise lassen sich auch für große Batteriekapazitäten geeignete formstabile und Brandschutzvorschriften genügende Abdeckstrukturen 38 herstellen, die eine Fläche von deutlich mehr als 1 m² aufweisen können.

Offenbart ist eine Abdeckstruktur 38, deren SMC-Grundkörper 32 mit zwei weiteren Schichten 12, 36 in einer Klebepresse 1 gleichzeitig verpresst und verklebt wird.

### Bezugszeichenliste:

- 1: Klebepresse
- 2: Oberwerkzeug
- 4: Unterwerkzeug
- 6: Formfläche
- 8: Auswölbung
- 12: Brandschutzbeschichtung
- 12a: Glimmerplatte
- 12b: Glimmerplatte
- 12c: Glimmerplatte
- 32: SMC-Grundkörper
- 36: EMV-Schicht
- 38: Abdeckstruktur
- 40: Klebefuge

## Patentansprüche

1. Verfahren zum Herstellen einer Abdeckstruktur (38) insbesondere für eine Batterie eines Elektrofahrzeugs mit den Schritten:
- Einlegen einer Brandschutzbeschichtung (12) in eine Klebepresse (1),
- Einlegen eines SMC-Grundkörpers (32) in die Klebepresse (1),
- Einlegen einer EMV-Schicht (36) in die Klebepresse (1), und
- Verkleben des SMC-Grundkörpers (32) mit der Brandschutzbeschichtung (12) und der EMV-Schicht (36) mittels der Klebepresse (1).

2. Verfahren nach Anspruch 1, wobei die genannten Schritte in der genannten Reihenfolge erfolgen.

3. Verfahren nach Anspruch 1, wobei zunächst eine Vorfixierung der Brandschutzbeschichtung (12) an dem SMC-Grundkörper (32) erfolgt.

4. Verfahren nach einem der Ansprüche 1 bis 3, wobei der SMC-Grundkörper (32) und die EMV-Schicht (36) und die Brandschutzbeschichtung (12) mittels eines auf zumindest ein Bauteil einer Klebepaarung applizierten Klebstoffs, wie einen Pulverklebstoff oder mittels eines reaktiven Hotmelt-Klebesystems miteinander verklebt werden.

5. Verfahren nach Anspruch 4, wobei der Klebstoff an der Klebepresse (1) oder im zeitlichen Abstand vor der Verklebung in der Klebepresse (1) aufgebracht wird.

6. Verfahren nach einem der Ansprüche 1 bis 5, wobei das Verpressen zeitnah nach dem Entformen des SMC-Grundkörpers (32) aus einem SMC-Presswerkzeug oder zeitnah nach dem Aufbringen des Klebstoffs oder zeitnah nach dem Vorfixieren der Brandschutzbeschichtung (12) erfolgt.

7. Verfahren nach einem der Ansprüche 1 bis 6, wobei das Verpressen räumlich nah an oder benachbart zu einem SMC-Presswerkzeug, in dem der SMC-Grundkörpers (32) geformt wurde, erfolgt.

## Claims

1. A method for manufacturing a cover structure (38), in particular for a battery of an electric vehicle, comprising the steps of:
- inserting a fire protection coating (12) into a bonding press (1),
- inserting an SMC main body (32) into the bonding press (1),
- inserting an EMC layer (36) into the bonding press (1), and
- bonding the SMC main body (32) to the fire protection coating (12) and the EMC layer (36) by means of the bonding press (1).

2. The method according to claim 1, wherein said steps are carried out in said order.

3. The method according to claim 1, wherein the fire protection coating (12) is initially pre-fixed to the SMC main body (32).

4. The method according to one of claims 1 to 3, wherein the SMC main body (32) and the EMC layer (36) and the fire protection coating (12) are bonded to one another by means of an adhesive applied to at least one component of an adhesive pairing, such as a powder adhesive or by means of a reactive hot-melt adhesive system.

5. The method according to claim 4, wherein the adhesive is applied at the bonding press (1) or at a time interval prior to bonding in the bonding press (1).

6. The method according to one of claims 1 to 5, wherein the pressing is carried out promptly after the SMC main body (32) has been demolded from an SMC pressing tool or promptly after the adhesive has been applied or promptly after the fire protection coating (12) has been pre-fixed.

7. The method according to one of claims 1 to 6, wherein the pressing takes place spatially close to or adjacent to an SMC pressing tool in which the SMC main body (32) has been formed.

## Revendications

1. Procédé de fabrication d'une structure de recouvrement (38), en particulier pour une batterie d'un véhicule électrique comprenant les étapes consistant à :
- introduire un revêtement de protection incendie (12) dans une presse de collage (1),
- introduire un corps de base SMC (32) dans la presse de collage (1),
- introduire une couche EMV (36) dans la presse de collage (1), et
- coller le corps de base SMC (32) au revêtement de protection incendie (12) et à la couche EMV (36) au moyen de la presse de collage (1).

2. Procédé selon la revendication 1, dans lequel les étapes mentionnées s'effectuent selon l'ordre indiqué.

3. Procédé selon la revendication 1, dans lequel une préfixation du revêtement de protection incendie (12) s'effectue d'abord au niveau du corps de base SMC (32).

4. Procédé selon l'une quelconque des revendications 1 à 3, dans lequel le corps de base SMC (32) et la couche EMV (36) et le revêtement de protection incendie (12) sont collés ensemble au moyen d'une colle appliquée sur au moins un composant d'un couple de collage, comme une colle en poudre ou au moyen d'un système de collage Hotmelt réactif.

5. Procédé selon la revendication 4, dans lequel la colle est appliquée au niveau de la presse de collage (1) ou à intervalle de temps avant le collage dans la presse de collage (1).

6. Procédé selon l'une quelconque des revendications 1 à 5, dans lequel le pressage s'effectue rapidement après le démoulage du corps de base SMC (32) à partir d'un outil de pressage SMC ou rapidement après l'application de la colle ou rapidement après la préfixation du revêtement de protection incendie (12).

7. Procédé selon l'une quelconque des revendications 1 à 6, dans lequel le pressage s'effectue à proximité ou au voisinage d'un outil de pressage SMC, dans lequel le corps de base SMC (32) a été formé.
